# EUROPEAN PATENT SPECIFICATION

(11) **EP 0 195 126 B1**
(45) Date of publication and mention of the grant of the patent: **29.09.1993**
(21) Application number: 85115834.5
(22) Date of filing: 12.12.1985
(51) Int. Cl.: C08G 73/00, C08G 73/02, C08G 65/32

(54) **Star-branched polyamides and star-branched polyamine derivates thereof**
Sternvernetzte Polyamide und davon hergestellte Polyamine
Polyamides ramifiés en étoile et polyamines en dérivant

(30) Priority: 18.12.1984 US 683299
(43) Date of publication of application: 24.09.1986
(73) Proprietor: THE DOW CHEMICAL COMPANY, Midland Michigan 48640-1967 (US)
(72) Inventor: Tomalia, Donald A., Midland Michigan 48640 (US); Hall, Mark J., Midland Michigan 48640 (US)
(74) Representative: Sternagel, Hans-Günther, Dr.

(56) References cited:
- EP-A- 0 115 771
- DE-A- 1 720 436
- US-A- 3 251 852
- US-A- 4 001 147
- US-A- 4 056 510
- US-A- 4 143 100

## Description

This invention relates to star-branched N-acylated polyamine derivatives and to processes for their preparation and their use as viscosity modifiers for aqueous media and hydrocarbon liquids.

Water-soluble polyamines and polyamides are known to be effective thickeners or viscosity modifiers for aqueous media. For example, acrylamide polymers and polyalkylenepolyamines such as polyethyleneimine have been employed extensively as thickeners for aqueous hydraulic fluids and fluid mobility control agents in secondary oil recovery. Hydrocarbon-soluble polyamides and polyamines have been used as viscosity modifiers and dispersants in lubricants. Unfortunately, however, such polymers often degrade when solutions of the polymers are subjected to a high degree of shear as is often the case in many applications for viscous aqueous fluids and hydrocarbon lubricants.

EP-A- 115 771 discloses a star polymer having at least one core-branch emanating from a core, each core-branch having at least one terminal group provided that the ratio of terminal groups of the core-branches is greater than 1:1, the density of terminal groups per unit volume in the polymer is at least 1.5 times that of a conventional star polymer having similar core and monomeric moieties and a comparable weight and number of core-branches, each of such branches of the conventional star polymer bearing only one terminal group, and a molecular volume that is no more than 60 percent of a molecular volume of said conventional star polymer.

US-A-4,056,510 discloses a water-soluble amine-modified polyether made by reacting an excess of an alkylene polyamine with a halogene-containing polyether prepared by reacting with 0.1 to 10 mol percent of a poly-1,2-epoxide, a halogen containing alkylene oxide monomer, or a mixture thereof with a non-halogen containing alkylene oxide monomer, herein said mixture contains at least about 50 mol percent of said halogen containing monomer.

US-A-4,143,100 describes a graft copolymer composition comprising the reaction product of a poly(vinylchloride) backbone polymer having allylic chloride groups therein and monomers forming a pendent graft copolymer said monomers being oxazoline or oxazine derivatives, the amount by weight of said pendent graft copolymer ranging from 0.5 to 90 percent based on the total weight of said graft copolymer, the number average molecular weight of said poly(vinylchloride) backbone ranging from 500 to 500,000, the amount of said allylic chloride groups in said backbone polymer ranging from 0.1 percent to 5 percent by weight, said graft polymers substituted from said chlorine atom of said allylic chloride group of said backbone polymer. Thus, this documents deals with comb graft copolymers and does not disclose or suggest anything about star-branched structured polymers.

It is the object of the present invention to provide polyamine derivatives which can be used as viscosity enhancer in aqueous and hydrocarbon fluids and which resists degradation upon exposure to high degrees of shear.

This object is attained by star-branched N-acylated polyamine having at least 3 branches emanating from a core wherein each branch has a plurality of amine groups in which each such amine group has its amine nitrogen in the chain of the branch and each such amine nitrogen bears a pendant carbonyl group, said amine groups being hydrolyzable without cleaving the chain branch, said polyamine being of the formula 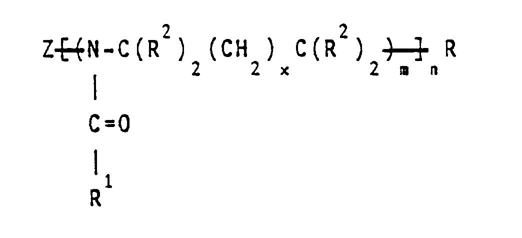
wherein the core Z is an n-valent hydrocarbon radical, each R¹ is independently hydrocarbyl, each R² is independently hydrogen or hydrocarbyl, R is a chainterminating group, m is a whole number from 2 to 1000, x is 0 or 1 and n is a whole number of at least 3.

Such star-branched polymers are soluble in aqueous and/or hydrocarbon liquids and have sufficient molecular weight to measurably increase the viscosity of the liquid when dissolved therein. The polymers have at least three branches emanating from a single core as in classical star-branched polymers.

This solution includes a process for making this water-soluble star-branched polyamine comprising contacting a core compound having a plurality of electrophilic groups with a 2-substituted-2-oxazoline or a 2-substituted-2-oxazine in an amount and under conditions sufficient to cause the oxazoline or oxazine group to react with a plurality of the electrophilic moieties of the core compound thereby causing ring-opening polymerization of the oxazoline or oxazine groups to form the desired water-soluble star-branched polyamine.

The polyamine derivatives are prepared by hydrolyzing the polyamide into the amine without leaving the chain branch.

Generally the moles of oxazoline or oxazine groups are at least nine times the moles of core compound and the reaction is conducted at a temperature range of from 50°C to 150°C.

The star-branched polyamines of the present invention are readily employed as viscosity enhancing agents in such applications as paint thickeners, hydraulic fluids, mobility control agents and fracturing fluids in oil recovery applications, and lubricants.

The star-branched polyamines of the present invention are polymers having at least 3 core branches emanating from a core or polymer. The core branches are of sufficient length and contain sufficient amine groups to make the star-branched polymer water-soluble and to enable it to perform as a viscosity increasing agent when added to an aqueous medium.

The star-branched polyamines are represented by the formula 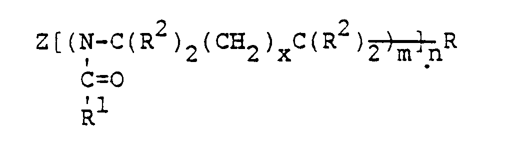
wherein Z is an n-valent hydrocarbon radical, each R¹ is hydrocarbyl such as aryl, alkyl or arylalkyl; each R² is individually hydrogen or hydrocarbyl; m is a number from 2 to 1000; each R is a chain-terminating group; x is 0 or 1; and n is a whole number of at least 3. In preferred star-branched polyamines, Z is an n-valent hydrocarbon radical such as 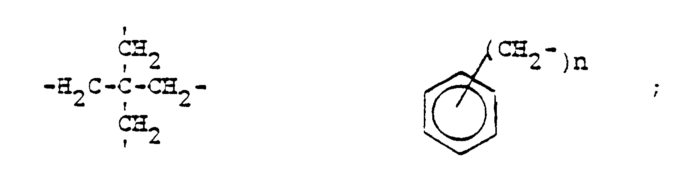
each R¹ is alkyl, alkylaryl or aryl having from 1 to 20 carbons; and each R² is hydrogen.

The star-branched polymers of this invention are readily prepared by reacting a compound capable of generating a polyvalent core e.g., ZXₙ wherein X is a halo, sulfonyl halide, sulfonate ester or triflate ester, and Z and n are as defined hereinbefore, with a compound having an oxazoline or oxazine moiety, e.g., 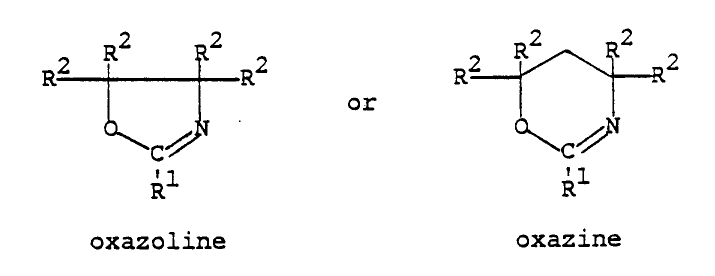
wherein R¹ and R² are as defined hereinbefore, under conditions sufficient to cause the oxazoline or oxazine ring to undergo a ring-opening reaction to form 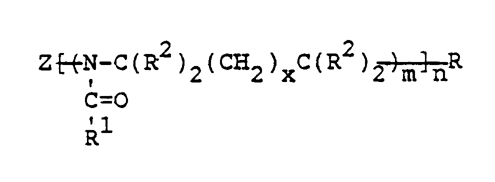
Advantageously, the degree of polymerization of this polymer, which is equivalent to m, is controlled by the molar ratio of the oxazoline or oxazine compound to the core-generating compound. For example, when m is 3 and n is 3, then the molar ratio of the oxazoline or oxazine compound to the core-generating compound employed is at least from 9:1 to 14:1. If, however, it is desirable to provide a compound having a degree of polymerization where m equals 6 and n is equal to 3, then the molar ratio of the oxazoline or oxazine compound to the core-generating compound is at least from 18:1 to 27:1. In general, the molar ratio of the oxazoline or oxazine compound to the core-generating compound is preferably at least 1.5 (m x n) most preferably at least 2 (m x n). That is the moles of said oxazoline or oxazine moiety is preferably at least nine times the moles of the core-generating compound because "n" is at least three and "m" is at least two as defined hereinabove.

Representative preferred core-generating compounds include polyhalohydrocarbons having a number of reactive halo groups corresponding to n which halo groups are available for reaction with an oxazoline moiety. Examples of such polyhalohydrocarbons include tetra(halomethyl)methane, tetra(bromomethyl)methane, hydroxymethyltri(bromomethyl)methane, 1,2,3,4,5,6-hexa(bromomethyl)benzene, 1,3,5-tri(bromomethyl)-2,4,6-trimethyl benzene. Other preferred core-generating compounds include polytosyl-hydrocarbons and polytrifylhydrocarbons having a number of tosyl or triflate groups corresponding to n which tosyl or triflate groups are available for reaction in an oxazoline moiety. Examples of such polytosyl- and polytrifylhydrocarbons include tetra(tosylmethyl)methane, tetratetra(trifylmethyl)methane. In general, multifunctional core-generating compounds having three or more (n>3) moieties which are able to undergo nucleophilic replacement by the oxazoline nitrogen to generate oxazolinium cations or initiator sites are employed. It is preferred that the chemical bond resulting from this oxazoline replacement reaction be stable to (i.e., resist) acid or alkaline hydrolysis. Of the foregoing core-generating compounds, the halides such as bromides and iodides are more preferred, with the tosylates and the triflate esters being the most preferred.

Representative oxazoline compounds that may be suitably employed in the practice of this invention include 2-alkyloxazolines such as 2-methyloxazoline, 2-ethyloxazoline and 2-propyloxazoline; other alkyloxazolines such as 2,4-dimethyloxazoline, 2,5-dimethyloxazoline, 2,4,5-trimethyloxazoline and the like; hydroxyalkyloxazolines such as 2-hydroxymethylethyloxazoline; haloalkyloxazolines such as 2-(chloromethyl)oxazoline and 2-(1,1-dichloroethyl)oxazoline; and aryloxazolines such as 2-phenyloxazoline and 2-(p-tolyl)oxazoline. Of the foregoing oxazolines, the 2-methyl-, 2-ethyl-, 2-phenyl- and 2-hydroxymethylethyloxazolines are preferred, with the 2-ethyloxazoline being the most preferred. Representative oxazine compounds are those which correspond in all other respects to the aforementioned oxazoline compounds. Of the oxazine compounds, the 2-methyl-, 2-ethyl-, 2-phenyl-and 2-hydroxymethylethyloxazines are preferred, with the 2-ethyloxazines being the most preferred.

The reaction to prepare the desired star - branched polyamine is carried out by contacting the core-generating compound with the oxazoline or oxazine compound in the presence of potassium iodide or other similar catalysts. Preferably, the reaction is carried out at temperatures in the range from 50°C to 150°C, and may be effected under neat conditions or in a solvent such as dimethylformamide or another nonreactive, but polar solvent. The resulting polyamine can be readily recovered by conventional means as illustrated hereinafter. When R¹ is C₁-C₃ alkyl or hydroxyalkyl, the resulting polyamine is a watersoluble polymer.

When R¹ is a C₄ or higher alkyl or aryl, the polymer is generally soluble in organic liquids such as hydrocarbons. However, upon hydrolysis, the lipophilic polyamines are converted to water-soluble polyamines.

The Lipophilic polyamine is readily converted to water-soluble polyamine by contacting the polyamine with strong acid such as hydrochloric or sulfuric acid under conditions sufficient to hydrolyze the amine groups, thereby forming the amine. The conditions employed for this hydrolysis are those well-known in the art for the hydrolysis of amines to amides such as described by K. M. Hem, J. Polym. Sci., 17, 1977-1990 (1979). Preferably, however, the hydrolysis is carried out using a strong acid such as hydrochloric acid or sulfuric acid in concentrations from 6N (normal) to 12N and at temperatures in the range from 50°C to 125°C. When total hydrolysis is desired, the total acid employed is preferably from 1.1 to 1.5 equivalents of acid per equivalent of amine moiety in the polymer. It is further understood that partial hydrolysis of the amine can be achieved by employing less acid on a mole basis than is required to hydrolyze all of the amine moieties, for example, about 1.3X equivalents of acid per equivalent of amide wherein X is equal to the mole percent of hydrolysis desired. The resulting polyamines are also very water-soluble and are useful as viscosity enhancers for aqueous compositions such as paints, lubricants and liquids used in secondary oil recovery applications. More importantly, such polyamines are especially useful as core-generating compounds in the preparation of dendritic polymers.

The following examples are given to illustrate the invention and should not be construed as limiting its scope. All parts and percentages in the following examples are by weight unless otherwise indicated.

### Example 1 Preparation of Star-Branched N-Acylated Polyamine

An 85-g (0.86 mole) portion of 2-ethyl-2-oxazoline was combined with 9.6 g (0.029 mole) of tribromoneopentyl alcohol (hydroxymethyltribromomethylmethane) and 1.4 g of potassium iodide in a 3-necked flask equipped with a reflux condenser, stirrer and heating mantle. The reaction mixture was heated with stirring at 90°C while protecting the mixture from moisture with a calcium chloride drying tube. The reaction mixture was heated at 90°C to 100°C for a period of 50 hours to produce an orange amber glassy mass which flows at 125°C and which was very water-soluble. This glassy, brittle polymer was ground into a tan colored powder and dissolved in methylene chloride at a ratio of 4.5 g of polymer in 30 ml of methylene chloride. This solution was slowly poured into 80 ml of diethyl ether while stirring with a magnetic stirrer. Initially, a light tan solid precipitated which became a syrupy gum after the entire methylene chloride solution was added. The cloudy supernatant was decanted leaving a syrupy residue which was then redissolved in 25 ml of methylene chloride. Half of this solution was added dropwise while stirring to 80 ml of diethyl ether. A light colored solid precipitated and was filtered and washed with two 10-ml portions of diethyl ether. This polymer has a softening point of 83°C to 91°C. Analysis of this sample by nuclear magnetic resonance and infrared spectroscopy indicated a star-shaped structure having polyamine moieties in the branches. Size exclusion chromatography indicated that this polymer is quite polydispersed which is probably due to the presence of star-branched polymers having branches with a wide range of degree of polymerisation. A monodispersed component is noted at longer elution times which is believed to be a small amount of homopolymer.

### Example 2 Preparation of Star-Branched N Acylated Polyamine

An 8.76-g (0.0217 mole) portion of 1,3,5-tribromomethylmesitylene was dissolved in 203.77 g (2.79 mole) of dimethylformamide and charged to a 1-liter, 3-necked round-bottom flask equipped with a reflux condenser and a stirrer. To this solution was added 83.198 g (0.98 mole) of 2-methyloxazoline. The ratio of initiator, i.e., 1,3,5-tribromomesitylene, to the methyloxazoline was 1 mole of initiator per 45 moles of methyloxazoline. The reaction mixture was then heated from ambient temperature to 45°C and maintained at this temperature while monitoring the progress of the reaction with size exclusion chromatography. Within a few minutes after all reactants were mixed, a white precipitate was observed to form. Within 2.5 hours, the reaction was clear and samples of the resulting yellowish solution were withdrawn and analyzed. After approximately 7 hours, the reaction was nearing 50 percent corpletion and was terminated. Termination of the reaction was accomplished by vacuum distilling all volatiles away from the polymeric residue. Distillation was performed at a maximum temperature of 65°C and a maximum vacuum of 2.7 mbar (2 mm of mercury). The resulting polymer was analyzed by size exclusion chromatography and determined to contain a significant quantity of trapped dimethylformamide. To remove this residual dimethylformamide, the residue was dissolved in methylene chloride at a ratio of 1 g of residue in 6 ml of methylene chloride and precipitated by slowly dropping this solution into 200-300 ml of diethyl ether. The polymer immediately precipitates from solution and was filtered and dried overnight in a vacuum oven. The resulting crystalline polymer was analyzed by scanning electron chromatography and for carbon 13 structure confirmation using nuclear magnetic resonance. These analyses indicated a star-branched polyamine having a degree of polymerization such that m equals 8 to 15.

### Example 3 - Preparation of a Star-Branched Polyamine

The star-branched polyamine of example 2 was hydrolyzed by the following procedure. A 5.8-g (1.37 x 10⁻³ mole) portion of the N Acylated polyamine of example 2 was combined with 10.5 g of 36 percent hydrochloric acid in water. A mild exotherm was noted upon combination and the reaction mixture was heated at reflux for 3 hours after which time a white solid product was observed. After a total reflux time of 5 hours, the reaction product was dissolved in 20 ml of deionized water. Sufficient hydroxide form of an ion-exchange resin was added to the reaction mixture to increase the pH of the mixture to about 8. The recovered amber colored syrup weighs 3.89 g wherein theoretical weight for total hydrolysis is 3.16 g. Therefore, it is assumed that the star-branched polyamine is approximately 72 percent hydrolyzed. Nuclear magnetic resonance analysis of the resulting mixture indicated a somewhat higher degree of hydrolysis and nuclear magnetic resonance and infrared spectroscopy as well as size exclusion chromatography confirm the star-branched character of the polyamine.

## Claims

1. A star-branched N-acylated polyamine having at least 3 branches emanating from a core wherein each branch has a plurality of amine groups in which each such amine group has its amine nitrogen in the chain of the branch and each such amine nitrogen bears a pendant carbonyl group, said amine groups being hydrolyzable without cleaving the chain branch, said polyamine being of the formula 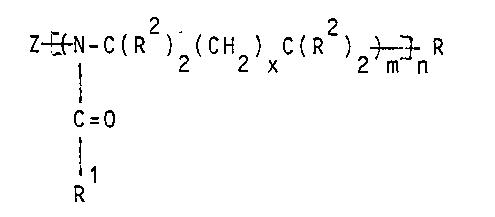 wherein the core Z is an n-valent hydrocarbon radical, each R¹ is independently hydrocarbyl, each R² is independently hydrogen or hydrocarbyl, R is a chainterminating group, m is a whole number from 2 to 1000, x is 0 or 1 and n is a whole number of at least 3.

2. The star-branched N-acylated polyamine of claim 1 wherein each R¹ is independently alkyl, aryl or alkylaryl having from 1 to 20 carbons, each R² is hydrogen, x is 0 and n is a whole number in the range from 3 to 20.

3. The star-branched N-acylated polyamine of claim 2 wherein Z is
C(CH₂-)₄ or 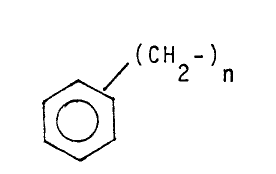 wherein n is from 3 to 6 and R is hydrogen or alkyl.

4. A process for preparing a water-soluble star-branched N-acylated polyamines having at least 3 branches emanating from a core wherein each branch has a plurality of amine groups in which each of such amine groups has its amine nitrogen in the chain of the branch and each such amine group bears a pendent carbonyl group, said amine groups being hydrolyzable without cleaving the chain branch, said polyamine being of the formula 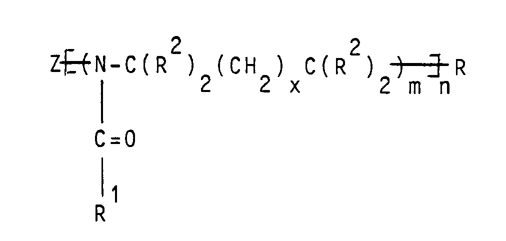 wherein the core Z is an n-valent hydrocarbon radical, each R¹ is independently hydrocarbyl, each R² is independently hydrogen or hydrocarbyl, R is a chainterminating group, m is a whole number from 2 to 1000, x is 0 or 1 and n is a whole number of at least 3, by contacting a core forming compound having a plurality of electrophilic groups with a 2-substituted-2-oxazoline or a 2-substituted-2-oxazine in an amount sufficient to cause oxazoline or oxazine group to react with a plurality of the electrophilic groups of said core forming compound thereby causing ring-opening polymerization of said oxazoline or oxazine group.

5. The process of claim 4 wherein the moles of said oxazoline or oxazine groups are at least nine times the moles of said core forming compound used.

6. The process of claim 4 where said process is conducted at a temperature range of from 50°C to 150°C.

7. A process for preparing a water-soluble star-branched polyamine by hydrolyzing the polyamine according to any of the claims 1 to 3 without cleaving the chain branch.

8. Use of the star-branched N-acylated polyamines according to any of claims 1 to 3 and their polyamine derivatives obtainable by the process of claim 7 as thickener or viscosity modifiers to aqueous media and hydrocarbon liquids.

## Patentansprüche

1. Sternförmig verzweigtes N-acyliertes Polyamin mit mindestens 3 sich von einem Kern aus erstreckenden Zweigen, wobei jeder Zweig eine Vielzahl von Aminogruppen aufweist und sich der Aminostickstoff jeder Aminogruppe in der Kette des Zweiges befindet und jedes dieser Aminostickstoffatome eine daran hängende Carbonylgruppe aufweist, wobei die Aminogruppen ohne Spaltung der Kettenverzweigung hydrolysierbar sind und das Polyamin die Formel aufweist 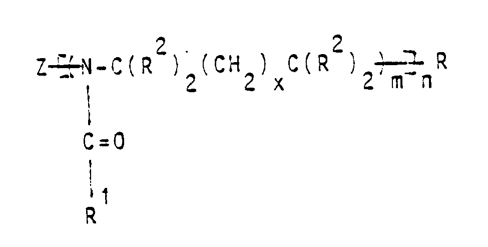 in der der Kern Z eine n-wertige Kohlenwasserstoffgruppe ist, jedes R¹ ist unabhängig Kohlenwasserstoff, jedes R² ist unabhängig Wasserstoff oder Kohlenwasserstoff, R ist eine Kettenendgruppe, m ist eine ganze Zahl von 2 bis 1000, x ist 0 oder 1 und n ist eine ganze Zahl von mindestens 3.

2. Sternförmig verzweigtes N-acyliertes Polyamin nach Anspruch 1,
**dadurch gekennzeichnet,**
daß jedes R¹ unabhängig Alkyl, Aryl oder Alkylaryl mit 1 bis 20 Kohlenstoffatomen ist, jedes R² ist Wasserstoff, x ist 0 und n ist eine ganze Zahl im Bereich von 3 bis 20.

3. Sternförmig verzweigtes N-acyliertes Polyamin nach Anspruch 1,
**dadurch gekennzeichnet,**
daß Z
C(CH₂-)₄ oder 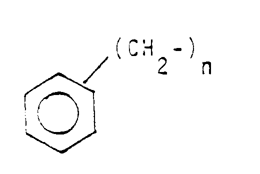 ist, in der n 3 bis 6 ist und R Wasserstoff oder Alkyl ist.

4. Verfahren zum Herstellen eines wasserlöslichen, sternförmig verzweigtes N-acylierten Polyamins mit mindestens 3 sich von einem Kern aus erstreckenden Zweigen, wobei jeder Zweig eine Vielzahl von Aminogruppen aufweist und sich der Aminostickstoff jeder Aminogruppe in der Kette des Zweiges befindet und jedes dieser Aminostickstoffatome eine daran hängende Carbonylgruppe aufweist, wobei die Aminogruppen ohne Spaltung der Kettenverzweigung hydrolysierbar sind und das Polyamin die Formel aufweist 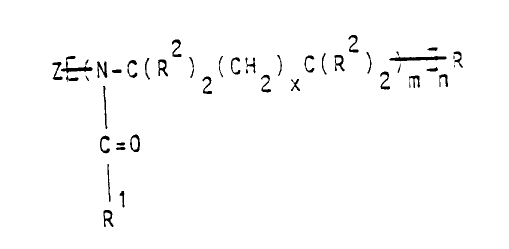 in der der Kern Z eine n-wertige Kohlenwasserstoffgruppe ist, jedes R¹ ist unabhängig Kohlenwasserstoff, jedes R² ist unabhängig Wasserstoff oder Kohlenwasserstoff, R ist eine Kettenendgruppe, m ist eine ganze Zahl von 2 bis 1000, x ist 0 oder 1 und n ist eine ganze Zahl von mindestens 3, durch Inberührungbringen einer kernbildenden Verbindung mit einer Vielzahl von elektrophilen Gruppen mit einem 2-substituierten-2-Oxazolin oder einem 2-substituierten-2-Oxazin in einer ausreichenden Menge, um Oxazolingruppen oder Oxazingruppen mit einer Vielzahl der elektrophilen Gruppen der kernbildenden Verbindung umzusetzen und dadurch eine Ringöffnungspolymerisation der Oxazolingruppe oder Oxazingruppe auszulösen.

5. Verfahren nach Anspruch 4,
**dadurch gekennzeichnet**,
daß die Anzahl der Mole der Oxazolin- oder der Oxazingruppen mindestens neunmal so hoch ist wie die Anzahl der Mole der verwendeten kernbildenden Verbindung.

6. Verfahren nach Anspruch 4,
**dadurch gekennzeichnet,**
daß das Verfahren bei einer Temperatur im Bereich von 50°C bis 150°C ausgeführt wird.

7. Verfahren zum Herstellen eines wasserlöslichen, sternförmig verzweigten Polyamins durch Hydrolysieren des Polyamins nach einem der Ansprüche 1 bis 3 ohne Spaltung der Kette des Zweiges.

8. Verwendung der sternförmig verzweigten N-acylierten Polyamine nach einem der Ansprüche 1 bis 3 und ihrer Polyaminderivate, erhältlich nach dem Verfahren von Anspruch 7, als Verdickungsmittel oder Viskositätsmodifiziermittel in wäßrigen Medien und flüssigen Kohlenwasserstoffen.

## Revendications

1. Polyamine N-acylée, ramifiée en étoile, présentant au moins 3 branches issues d'un coeur, dont chacune possède plusieurs groupes amino, l'atome d'azote du groupe amino de chacun desdits groupes amino étant situé dans la chaîne de la branche et chacun desdits atomes d'azote de groupe amino portant un groupe carbonyle rattaché, lesdits groupes amino étant hydrolysables sans coupure de la chaîne de la branche, ladite polyamine répondant à la formule : 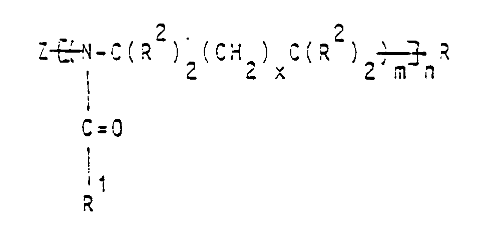 dans laquelle le coeur Z est un radical hydrocarboné de valence n, chaque R¹ représente, indépendamment, un groupe hydrocarbyle, chaque R² représente, indépendamment, un atome d'hydrogène ou un groupe hydrocarbyle, R représente un groupe terminant la chaîne, m représente un nombre entier de 2 à 1000, x est égal à 0 ou 1 et n représente un nombre entier égal à au moins 3.

2. Polyamine N-acylée, ramifiée en étoile, selon la revendication 1, dans laquelle chaque R¹ représente, indépendamment, un groupe alkyle, aryle ou alkylaryle ayant de 1 à 20 atomes de carbone, chaque R² représente un atome d'hydrogène, x est égal à 0 et n est un nombre entier compris dans l'intervalle allant de 3 à 20.

3. Polyamine N-acylée, ramifiée en étoile, selon la revendication 2, dans laquelle Z représente
C(CH₂-)₄ ou 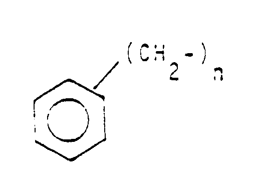 n représentant un nombre entier de 3 à 6, et R représente un atome d'hydrogène ou un groupe alkyle.

4. Procédé de préparation d'une polyamine N-acylée, ramifiée en étoile, soluble dans l'eau, présentant au moins 3 branches issues d'un coeur, dont chacune possède plusieurs groupes amino, l'atome d'azote du groupe amino de chacun desdits groupes amino étant situé dans la chaîne de la branche et chacun desdits atomes d'azote de groupe amino portant un groupe carbonyle rattaché, lesdits groupes amino étant hydrolysables sans coupure de la chaîne de la branche, ladite polyamine répondant à la formule : 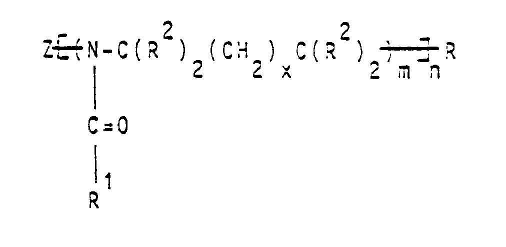 dans laquelle le coeur Z est un radical hydrocarboné de valence n, chaque R¹ représente, indépendamment, un groupe hydrocarbyle, chaque R² représente, indépendamment, un atome d'hydrogène ou un groupe hydrocarbyle, R représente un groupe terminant la chaîne, m est un nombre entier de 2 à 1000, x est égal à 0 ou 1, et n est un nombre entier égal à au moins 3, procédé dans lequel on met en contact un composé formant le coeur, possédant plusieurs groupes électrophiles, avec une 2-oxazoline substituée en position 2 ou une 2-oxazine substituée en position 2, prise en une quantité suffisante pour provoquer la réaction du groupe oxazoline ou oxazine avec plusieurs des groupes électrophiles dudit composé formant le coeur, ce qui provoque la polymérisation par ouverture de cycle dudit groupe oxazoline ou oxazine.

5. Procédé selon la revendication 4, dans lequel le nombre de moles dudit groupe oxazoline ou oxazine utilisé représente au moins neuf fois le nombre de moles dudit composé formant le coeur utilisé.

6. Procédé selon la revendication 4, qui est réalisé à une température comprise dans l'intervalle allant de 50°C à 150°C.

7. Procédé de préparation d'une polyamine ramifiée en étoile, soluble dans l'eau, par hydrolyse de la polyamine selon l'une quelconque des revendications 1 à 3, sans coupure de la chaîne de la branche.

8. Utilisation des polyamines N-acylées, ramifiées en étoile, selon l'une quelconque des revendications 1 à 3, et de leurs dérivés polyamine, préparables par le procédé selon la revendication 7, comme épaississants ou modificateurs de viscosité pour des milieux aqueux et des hydrocarbures liquides.
